# EUROPÄISCHE PATENTSCHRIFT

(11) **EP 0 546 637 B1**
(45) Veröffentlichungstag und Bekanntmachung des Hinweises auf die Patenterteilung: **02.08.1995**
(21) Anmeldenummer: 92203833.6
(22) Anmeldetag: 08.12.1992
(51) Int. Cl.: H02G 3/18

(54) **Kombination aus einer elektrischen Verbindungsdose und einer Überwurfmutter**
Electrical connection box-nut combination
Combinaison d'une boîte de connexion électrique avec un écrou

(30) Priorität: 12.12.1991 NL 9102080
(43) Veröffentlichungstag der Anmeldung: 16.06.1993
(73) Patentinhaber: B.V. Kunststoffenindustrie Attema, NL-4203 NN Gorinchem (NL)
(72) Erfinder: Goth, Robin, NL-6824 GT Arnhem (NL)
(74) Vertreter: Mommaerts, Johan Hendrik, Dipl.-Phys.

(56) Entgegenhaltungen:
- FR-A- 2 140 886
- NL-A- 7 902 262

## Beschreibung

Die Erfindung betrifft eine Kombination einer elektrischen Verbindungsdose, die zumindest einen von einer die Verbindungsdose begrenzenden Wand herausragenden, mit innerem Schraubengewinde versehenen Dosenrohrstutzen aufweist, der an dem von der Außenseite der Dose abgewandten Ende durch eine Brechwand abgeschlossen ist, und einer Überwurfmutter deren Ende röhrenförmig ist und mit einem äußeren Schraubengewinde versehen ist, und dazu bestimmt ist, von der Außenseite der Verbindungsdose ab, in einen Dosenrohrstutzen geschraubt zu werden. Die Erfindung betrifft weiterhin Elemente, die für die Verwendung in einer derartigen Kombination vorgesehen sind.

Elektrische Verbindungsdosen sind in vielerlei Ausführungen allgemein bekannt und bieten einen abgeschlossenen Raum für das Unterbringen von Verbindungen zwischen verschiedenen elektrischen Leitern. Derartige elektrische Leiter können je nachdem derer Ausführung und derer Anwendung auf verschiedene Weisen in die Verbindungsdose hineingeführt werden, die dazu im allgemeinen an mehreren Stellen in den Seitenwänden, im Deckel oder im Boden wegbrechbare Teile, sogenannte Brechwände aufweist. Eine Brechwand enthält einen starken zentralen Teil, der entlang dessen Umfang über eine relativ schwache Verbindung mit einer Seitenwand, dem Deckel oder dem Boden der Verbindungsdose verbunden ist. Also kann die Brechwand aus der Verbindungsdose dadurch entfernt werden, daß man darauf eine solche Kraft ausübt, daß die vorher genannte schwache Verbindung bricht oder reißt, und an der Stelle der Brechwand eine Öffnung für die Einfuhr der elektrischen Leitungen in der Verbindungsdose entsteht. Die Brechwände werden ausschließlich an den Stellen entfernt, wo einen Zugang in den inneren Raum der Verbindungsdose gewünscht ist; an den übrigen Stellen wo sich eine Brechwand befindet, kann diese intakt bleiben und den ungewünschten Zugang von Flüssigkeit, Schmutz, Staub u.ä., aber auch von Körperteilen ins Innere der Verbindungsdose vorbeugen.

Eine elektrische Verbindungsdose, die zumindest einen von einer die Verbindungsdose begrenzenden Wand herausragenden, mit innerem Schraubengewinde versehenen Dosen-rohrstutzen aufweist, der an dem von der Außenseite der Dose abgewandten Ende durch eine Brechwand abgeschlossen ist, wird in FR-A-2 140 886 offenbart.

Das Entfernen einer Brechwand wird vorzugsweise vorangehend an der Montage der Verbindungsdose an oder in eine Wand, einen Fußboden od.dgl. ausgeführt. Hierzu können, abhängig vom Material der Verbindungsdose, verschiedene Werkzeuge, wie ein Schraubenzieher oder ein Messer, verwendet werden. Dabei wird ein Ende eines derartigen Werkzeugs vorzugsweise an einem Punkt in der Nähe des Umfangs der sich in einer Seitenwand, in dem Deckel oder in dem Boden befindenden Brechwand gesetzt, wonach durch allmähliges oder plötzliches Erhöhen der durch das Werkzeug ausgeübte Kraft in der Nähe dieser Stelle die schwache Verbindung des zentralen Teiles der Brechwand mit der restlichen Verbindungsdose reißt oder bricht und die Brechwand in seiner Ganzheit oder in Teilen weiter entfernt werden kann.

Bis jetzt war die Anwendung von Werkzeugen für das Entfernen einer Brechwand aus einer Verbindungsdose unvermeidlich. Nachteile einer solchen Handlung sind jedoch, daß dies eine gewisse Zeit in Anspruch nimmt, und daß die Reproduzierbarkeit der Handlung durch deren Unkontrollierbarkeit ungünstig ist. Weiter kann die Erreichbarkeit der Brechwand ungünstig sein, wodurch das Entfernen zuerst nur zum Teil gelingt, und zusätzliche Handlungen ausgeführt werden müssen um die Brechwand völlig zu entfernen.

Der Erfindung liegt die Aufgabe zugrunde, diese Nachteile zu beheben, insbesondere im Falle einer elektrischen Verbindungsdose mit Rohrstutzen, in denen Überwurfmuttern geschraubt werden können. Dazu verschafft die Erfindung eine Kombination aus einer elektrischen Verbindungsdose und einer Überwurfmutter, wie hieroben beschrieben, welche Kombination dadurch gekennzeichnet ist, daß in montiertem Zustand, zwischen der der Überwurfmutter zugewandten Seite der Brechwand und der der Brechwand zugewandten Seite des röhrenförmigen Endes der Überwurfmutter, Bruchmittel angebracht sind, die sich entlang einem Teil des Innenumfangs des Dosenrohrstutzens erstrecken, wobei die axiale Länge des inneren Schraubengewindes des Dosenrohrstutzens kleiner ist als die Summe der axialen Längen der Bruchmittel und des äußeren Schraubengewindes des röhrenförmigen Endes der Überwurfmutter. Weiterhin werden gemäß den Ansprüchen 8, 10, 13 eine Verbindungsdose, eine Überwurfmutter und ein Ring offenbart, die mit Bruchmitteln versehen sind. Die Bruchmittel verschaffen, während des Einschraubens des Endes der Überwurfmutter in den Dosenrohrstutzen im Prinzip die gleiche Wirkung als die Werkzeuge, die wie beim Stand der Technik für das Entfernen einer Brechwand angewendet werden. Eine zusätzliche Handlung fällt jetzt aber weg, indem die Entfernung der Brechwand auf sehr kontrollierte Weise stattfindet.

Besondere Ausführungsarten der Erfindungen sind in den abhängigen Ansprüchen offenbart.

Vorzugsweise weisen die Bruchmittel einer oder mehrere an der von der Innenseite der Verbindungsdose abgewandten Seite der Brechwand und entlang deren Umfang angebrachte Nocken auf. Beim Einschrauben des röhrenförmigen Endes der Überwurfmutter in einen Dosenrohrstutzen stößt das Ende der Überwurfmutter an einen derartigen Nocken an und übt an der Stelle des Nockens eine erhebliche konzentrierte Kraft aus, wodurch die Brechwand, von der Stelle des Nockens ausgehend, entlang deren Umfang beim Weitereinschrauben der Überwurfmutter losbricht oder losreißt.

Vorzugsweise ist ein Nocken entlang dem zu einer Deckelöffnung der Dose gerichteten Teil des Umfangs einer Brechwand, mit der eine Seitenwand der Verbindungsdose versehen ist, angebracht, so daß eine Brechwand, die entlang deren Umfang, ausgehend von der Stelle des Nockens, in beide Richtungen nur zum Teil losbricht oder losreißt, bei dem Einführen eines Kabels durch die Überwurfmutter hindurch, zwischen dem Kabel und der Bodenseite der Verbindungsdose landet und also die Verbindungsarbeiten nicht behindert.

In einer anderen bevorzugten Ausführungsform weisen die Bruchmittel einer oder mehrere an der zur Brechwand gerichteten Seite des röhrenförmigen Endes der Überwurfmutter und entlang deren Umfang angebrachte Nocken auf. Beim Eindrehen des röhrenförmigen Endes der Überwurfmutter in einen Dosenrohrstutzen übt ein derartiger Nocken eine mit der Gewindesteigung der zusammenwirkenden Schraubengewinde zunehmende Bruchkraft entlang dem Umfang der Brechwand aus. Der Unterschied mit der Situation, in der der Nocken auf die Bruchplatte gestellt ist, hängt mit der Tatsache zusammen, daß der Nocken sich jetzt beim Andrehen der Überwurfmutter entlang dem Umfang der Brechwand bewegt und so eine vollständige Entfernung der Brechwand bewirken kann.

Es ist hierbei vorteilhaft, insbesondere wenn die Verbindungsdose aus einem relativ spröden Material hergestellt ist, die Nocken an der zur Bruchöffnung gerichteten Seite abzurunden. Die Reibung eines Nockens auf der Oberfläche der Brechwand ist in dieser Ausführung minimal, so daß die benötigte Kraft für das Einschrauben der Überwurfmutter nicht exzessiv zunimmt bei dem durch das Einschrauben der Überwurfmutter zunehmenden Druck des Nockens auf die Brechwand.

Dagegen kann es vorteilhaft sein, die Nocken mit einem zur Brechwand gerichteten zugespitzten Ende zu versehen, wenn die Verbindungsdose aus einem relativ weichen Material hergestellt ist. Die Brechwand kann auf diese Weise beim Einschrauben der Überwurfmutter praktisch ringsherum losgeschnitten werden.

In einer weiteren Ausführungsform weisen die Bruchmittel einen Ring mit einem Diameter auf, der kleiner als der kleinste innere Diameter des mit Schraubengewinde versehenen Dosenrohrstutzens ist, auf welchen Ring an einem Ende davon einer oder mehrere Nocken angebracht sind. Die Anwendung solcher Nocken ist besonders vorteilhaft wenn eine bereits bestehende Kombination einer Verbindungsdose und Überwurfmutter nachträglich mit Bruchmitteln versehen werden muß. Die Wirkung solcher Bruchmittel kommt im Prinzip mit der Wirkung auf eine Brechwand angebrachter Nocken überein, wie oben beschrieben ist.

Die Erfindung wird nachfolgend anhand der Zeichnungen näher erläutert, worin:
- Fig. 1: eine Seitenansicht, zum Teil in Querschnitt, eines Teiles einer erfindungsgemäßen Kombination zeigt;
- Fig. 2: die Kombination von Fig. 1 in montiertem Zustand zeigt;
- Fig. 3: eine geänderte Ausführung der Kombination von Fig. 1 zeigt;
- Fig. 4: eine Seitenansicht, zum Teil in Querschnitt, einer zweiten bevorzugten Ausführungsform einer erfindungsgemäßen Kombination zeigt; und
- Fig. 5: eine Seitenansicht, zum Teil in Querschnitt, einer dritten bevorzugten Ausführungsform einer erfindungsgemäßen Kombination zeigt.

Übereinstimmende Elemente und Teile sind in den verschiedenen Figuren mit gleichen Bezugszeichen bezeichnet.

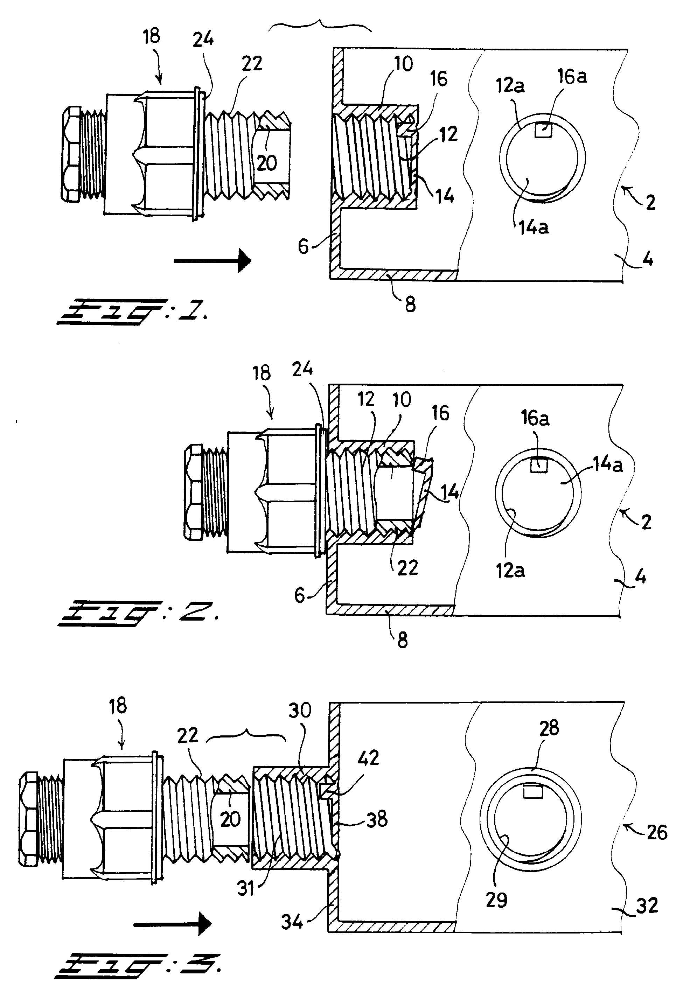

Fig. 1 zeigt einen Teil einer Verbindungsdose 2 mit Seitenwänden 4 und 6 und einen Boden 8. In die Seitenwände 4 und 6 sind zur Innenseite der Verbindungsdose 2 herausragende, mit innerem Schraubengewinde versehenen Dosenrohrstutzen angebracht, wie der Rohrstutzen 10 mit dem innerem Schraubengewinde 12. Der Rohrstutzen 10 ist an dem zur Innenseite der Verbindungsdose 2 gerichteten Ende durch eine Brechwand 14 abgeschlossen, worauf an der vom inneren Raum der Verbindungsdose 2 abgewandten Seite einen rechteckigen Nocken 16 angebracht ist. Im Seitenansicht der Wand 4 sind ein derartiges Schraubengewinde 12a, eine Brechwand 14a und Nocken 16a abgebildet. Die Verbindungsdose wird im allgemeinen aus einem Ganzen und aus einem Material mittels eines Spritzverfahrens hergestellt und wird mit einem nicht näher gezeigten Deckel abgeschlossen. Es ist selbstverständlich auch möglich, selbst in demselben Spritzverfahren, verschiedene Materialien anzuwenden.

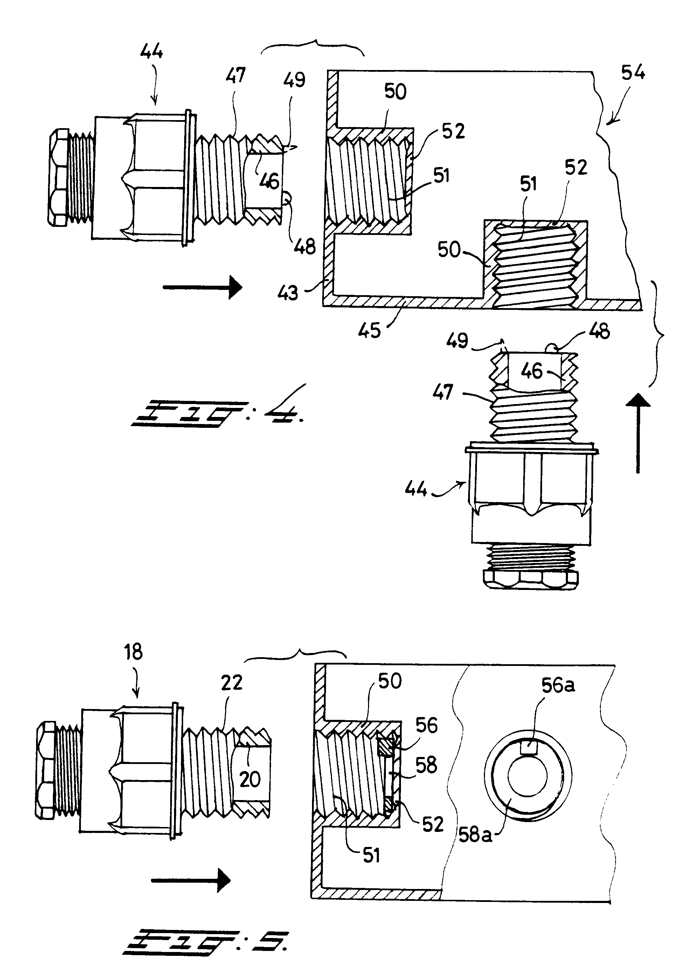

Vor der Öffnung des Rohrstustutzens 10 in der Seitenwand 6 der Verbindungsdose befindet sich eine Überwurfmutter 18, die an dem zur Verbindungsdose 2 gerichteten röhrenförmigen Ende 20 mit einem äußeren Schraubengewinde 22 versehen ist, dessen Gewindesteigung und Abmessungen an die des inneren Schraubengewindes 12 des Rohrstutzens 10 angepaßt sind. Es ist dabei im Prinzip möglich, das röhrenförmige Ende 20 der Überwurfmutter 18 so weit in den Dosenrohrstutzen zu schrauben (mit einem Pfeil angedeutet), daß ein Abdichtring 24 gegen die Außenseite der Seitenwand 6 stößt. Diese Situation ist in Fig. 2 wiedergegeben.

In einer Phase des Einschraubens, die zwischen den in Fig. 1 und Fig. 2 gezeigten Phasen gelegen ist, stößt die Vorderseite des röhrenförmigen Endes der Überwurfmutter 20 gegen den Nocken 16 auf die Brechwand 14, wodurch die Brechwand 14 entlang deren Umfang, ausgehend von der Lage des Nockens 16, losreißt oder losbricht und anschließend die in Fig. 2 gezeigte Situation erreicht werden kann. Bei dem Einführen von elektrischen Leitungen, z.B. ein Kabel, durch die Überwurfmutter hindurch in die Verbindungsdose, wird die Brechwand 14 weiter zur Seite gedrückt, so daß die ganze Durchgangsöffnung des röhrenförmigen Endes der Überwurfmutter 20 und der Dosenrohrstutzen 10 frei werden.

In der in Fig. 1 und 2 gezeigten Ausführungsform der Kombination der Verbindungsdose und Überwurfmutter ist die axiale Länge des äußeren Schraubengewindes 22 der axialen Länge des inneren Schraubengewindes 12 gleich. Die axiale Länge des äußeren Schraubengewindes 22, und damit die Länge des röhrenförmigen Endes der Überwurfmutter 20, kann aber auch, abhängig von der axialen Länge des Nockens 16, einigermaßen kleiner als die Länge des inneren Schraubengewindes 12 in dem Dosenrohrstutzen 10, oder gerade größer als die axiale Länge des inneren Schraubengewindes 12 sein. Vor allem im letztgenannten Falle wird die Brechwand beim vollständigen Einschrauben der Überwurfmutter 18 völlig weggedrückt ggf. entfernt werden.

In der Ausführungsform der in Fig. 3 gezeigten Verbindungsdose 26 befinden sich die Dosenrohrstutzen 28 und 30 mit jeweiligen inneren Schraubengewinden 29 und 31 an der Außenseite der jeweiligen Seitenwänden 32 und 34. Das Anbringen einer Überwurfmutter 18 in den Dosenrohrstutzen 30 wird übrigens in derselben Weise als im Falle der Verbindungsdose 2 laut Fig. 1 ausgeführt, und auch das Entfernen der Brechwand 38 als Folge einer über das röhrenförmige Ende der Überwurfmutter 20 auf den Nocken 42 der Brechwand 38 ausgeübten Kraft findet im Prinzip in der bereits anhand der Figuren 1 und 2 illustrierten Weise statt. Es wird übrigens deutlich sein, daß es ebenfalls möglich ist, das erfindunsgemäße Prinzip auf eine Verbindungsdose anzuwenden, bei der ein Dosenrohrstutzen zum Teil in eine Verbindungsdose und außerhalb dieser Verbindungsdose heraussticht.

Fig. 4 zeigt Überwurfmuttern 44 auf denen das röhrenförmige Ende 46 mit äußerem Schraubengewinde 47 mit einem abgerundeten Nocken 48 versehen ist. Beim Einschrauben der Überwurfmuttern 44 in dazugehörige, in eine Seitenwand 43 und einen Boden 45 angebrachte Rohrstutzen 50 mit innerem Schraubengewinde 51 stößt jeder Nocken 48 gegen die an das Ende eines Dosenrohrstutzens 50 angebrachte Brechwand 52, wodurch die Brechwand 52 entfernt wird, und das durch jede Überwurfmutter 44 hindurch Einführen elektrischer Leitungen ins Innere der Verbindungsdose 54 stattfinden kann. Ein abgerundeter Nocken 48 wird vorzugsweise angewendet, wenn die Verbindungsdose 54 aus einem harten, spröden Kunststoff hergestellt ist. Wenn das Material der Verbindungsdose 54 dagegen relativ biegsam und zäh ist, kann mit Vorteil einen Nocken mit einem zugespitzten Ende angewendet werden, wie bei 49 mit Strichlinien angegeben ist.

In Fig. 5 sind Bruchmittel in der Form eines mit Nocken 56, 56a versehenen Ringes 58, 58a angebracht. Wiederum wird durch das Einschrauben einer Überwurfmutter 18 in einen Dosenrohrstutzen 50 eine Entfernung einer Brechwand 52 in der bereits anhand der vorhergehenden Figuren illustrierten Weise stattfinden können.

## Patentansprüche

1. Kombination einer elektrischen Verbindungsdose (2;26;54), die zumindest einen von einer die Verbindungsdose begrenzenden Wand (4,6;32,34;43,45) herausragenden, mit innerem Schraubengewinde (12;31;51) versehenen Dosenrohrstutzen (10;30;50) aufweist, der an dem von der Außenseite der Dose abgewandten Ende durch eine Brechwand (14;38;52) abgeschlossen ist, und einer Überwurfmutter (18;44) deren Ende röhrenförmig ist und mit einem äußeren Schraubengewinde (22;47) versehen ist, und dazu bestimmt ist, von der Außenseite der Verbindungsdose ab in einen Dosenrohrstutzen geschraubt zu werden, dadurch gekennzeichnet, daß in montiertem Zustand zwischen der der Überwurfmutter (18;44) zugewandten Seite der Brechwand (14;38;52) und der der Brechwand zugewandten Seite des röhrenförmigen Endes der Überwurfmutter (20;46) Bruchmittel (16;42;56,58) angebracht sind, die sich entlang einem Teil des Innenumfangs des Dosenrohrstutzens (10;30;50) erstrecken, wobei die axiale Länge des inneren Schraubengewindes (12;31;51) des Dosenrohrstutzens kleiner ist als die Summe der axialen Längen der Bruchmittel und des äußeren Schraubengewindes (22;47) des röhrenförmigen Endes der Überwurfmutter.

2. Kombination nach Anspruch 1, dadurch gekennzeichnet, daß die Bruchmittel einer oder meherere an der von der Innenseite der Verbindungsdose (2;26;54) abgewandten Seite der Brechwand (14;38;52) und entlang deren Umfang angebrachte Nocken (16;42;56) aufweisen.

3. Kombination nach Anspruch 2, dadurch gekennzeichnet, daß ein Nocken (16;56) entlang dem zu einer Deckelöffnung der Verbindungsdose (2;26;54) gerichteten Teil des Umfangs einer Brechwand (14;38;52), mit der eine Seitenwand der Verbindungsdose versehen ist, angebracht ist.

4. Kombination nach Anspruch 3, dadurch gekennzeichnet, daß die Bruchmittel einer oder mehrere an der zur Brechwand (52) gerichteten Seite des röhrenförmigen Endes der Überwurfmutter (46) und entlang deren Umfang angebrachte Nocken (48,49) aufweisen.

5. Kombination nach Anspruch 4, dadurch gekennzeichnet, daß der Nocken (48) an der zur Brechwand (52) gerichteten Seite abgerundet ist.

6. Kombination nach Anspruch 4, dadurch gekennzeichnet, daß der Nocken (49) an der zur Brechwand (52) gerichteten Seite mit einem zugespitzten Ende versehen ist.

7. Kombination nach Anspruch 1, dadurch gekennzeichnet, daß die Bruchmittel einen Ring (58) mit einem Diameter, der kleiner als der kleinste inneren Diameter der mit Schraubengewinde (51) versehenen Dosenrohrstutzen (50) ist, aufweisen, welcher Ring an einem Ende davon mit einem oder mehreren Nocken (56) versehen ist.

8. Elektrische Verbindungsdose (2;26;54), die zumindest einen von einer die Verbindungsdose begrenzenden Wand (4,6;32,34;43,45) herausragenden, mit innerem Schraubengewinde (12; 31; 51) versehenen Dosenrohrstutzen (10;30;50) aufweist, der an dem von der Außenseite der Dose abgewandten Ende durch eine Brechwand (14;38;52) abgeschlossen ist, und dazu bestimmt ist, eines röhrenförmiges und mit einem äußeren Schraubengewinde (22; 47) versehenes Ende einer Überwurfmutter (18; 44) von der Außenseite der Verbindungsdose ab aufzunehmen, dadurch gekennzeichnet, daß die von der Innenseite der Verbindungsdose (2;26;54) abgewandten Seite der Brechwand (14;38;52) entlang deren Umfang eine oder mehrere Nocken (16;42;56) aufweist, wobei die axiale Länge des inneren Schraubengewindes (12;31;51) des Dosenrohrstutzens kleiner ist als die Summe der axialen Längen eines Nockens und des äußeren Schraubengewindes (22;47) des röhrenförmigen Endes der Überwurfmutter.

9. Verbindungsdose nach Anspruch 8, dadurch gekennzeichnet, daß ein Nocken (16;56) entlang dem zu einer Deckelöffnung der Verbindungsdose (2;26;54) gerichteten Teil des Umfangs einer Brechwand (14;38;52), mit der eine Seitenwand der Verbindungsdose versehen ist, angebracht ist.

10. Überwurfmutter (18;44) deren Ende röhrenförmig ist und mit einem äußeren Schraubengewinde (22;47) versehen ist, und dazu bestimmt ist, von der Außenseite einer elektrischen Verbindingsdose ab in einen Dosenrohrstutzen (10;30;50) der Verbindungsdose geschraubt zu werden, wobei der Dosenrohrstutzen von einer die Verbindingsdose begrenzenden Wand (4,6;32,34;43,45) herausragt, mit innerem Schraubengewinde (12;31;51) versehen ist, und an dem von der Außenseite der Dose abgewandten Ende durch eine Brechwand (14;38;52) abgeschlossen ist, dadurch gekennzeichnet, daß die zur Brechwand (52) zu richtenden Seite des röhrenförmigen Endes der Überwurfmutter (46) entlang deren Umfang eine oder mehrere Nocken (48,49) aufweist, wobei die Summe der axialen Längen eines Nockens und des aüßeren Schraubengewindes (22; 47) des röhrenförmigen Endes der Überwurfmutter größer ist als die axiale Länge des inneren Schraubengewindes (12;31;51) des Dosenrohrstutzens.

11. Überwurfmutter nach Anspruch 10, dadurch gekennzeichnet, daß der Nocken (48) an der zur Brechwand (52) zu richtenden Seite abgerundet ist.

12. Überwurfmutter nach Anspruch 10, dadurch gekennzeichnet, dass der Nocken (49) an der zur Brechwand (52) zu richtenden Seite mit einem zugespitzten Ende versehen ist.

13. Ring (58) für Kombination einer elektrischen Verbindungsdose, die zumindest einen von einer die Verbindungsdose begrenzenden Wand herausragenden, mit innerem Schraubengewinde (51) versehenen Dosenrohrstutzen (50) aufweist, der an dem von der Außenseite der Dose abgewandten Ende durch eine Brechwand (52) abgeschlossen ist, und einer Überwurfmutter (18) deren Ende röhrenförmig ist und mit einem äußeren Schraubengewinde (22) versehen ist, und dazu bestimmt ist, von der Außenseite der Verbindingsdose ab in einen Dosenrohrstutzen geschraubt zu werden, dadurch gekennzeichnet, dass der Ring (58) einem Diameter hat, der kleiner als der kleinste inneren Diameter der mit Schraubengewinde (51) versehenen Dosenrohrstutzen (50) ist, welcher Ring an einem Ende davon mit einem oder mehreren Nocken (56) versehen ist, und dazu bestimmt ist, in montiertem Zustand zwischen der der Überwurfmutter (18) zugewandten Seite der Brechwand (52) und der der Brechwand zugewandten Seite des röhrenförmigen Endes der Überwurfmutter angebracht zu werden, wobei die axiale Länge des inneren Schraubengewindes (51) des Dosenrohrstutzens kleiner ist als die Summe der axialen Längen des Ringes, eines Nockens und des äußeren Schraubengewindes (22) des röhrenförmigen Endes der Überwurfmutter.

## Claims

1. A combination of an electrical junction box (2; 26; 54) having at least one socket (10; 30; 50) which has an internal screwthread (12; 31; 51), projects from a box-bounding wall (4, 6; 32, 34; 43, 45), and is closed at the end remote from the outside of the box by a knock-out wall (14; 38; 52), and of a compression nut (18; 44), the end of which is tubular and has an external screwthread (22; 47), and is adapted to be screwed into a socket from the outside of the box, characterised in that in the assembled state knock-out means (16; 42; 56, 58) are provided between, on the one hand, the side of the knock-out wall (14; 38; 52) which faces the compression nut (18; 44) and, on the other hand, the side of the tubular end of the compression nut (20; 46) which faces the knock-out wall, the said knock-out means extending along part of the inner periphery of the socket (10; 30; 50), the axial length of the internal screwthread (12; 31; 51) of the socket being less than the sum of the axial lengths of the knock-out means and of the external screwthread (22; 47) of the tubular end of the compression nut.

2. A combination according to claim 1, characterised in that the knock-out means have one or more teeth or the like (16; 42, 56) which are disposed on the side of the knock-out wall (14; 38; 52) facing away from the inside of the box (2; 26; 54) and along the periphery of said wall.

3. A combination according to claim 2, characterised in that a tooth or the like (16; 56) is disposed along the part of the periphery of a knock-out wall (14; 38; 52) facing a cover aperture of the box (2; 26; 54), such knock-out wall being provided in a side wall of the box.

4. A combination according to claim 3, characterised in that the knock-out means have one or more teeth or the like (48, 49) which are disposed on the side of the tubular end of the compression nut (46) which faces the knock-out wall (52) and along the periphery of the compression nut.

5. A combination according to claim 4, characterised in that the tooth or the like (48) is rounded on the side facing the knock-out wall (52).

6. A combination according to claim 4, characterised in that the tooth or the like (49) has a pointed end on the side facing the knock-out wall (52).

7. A combination according to claim 1, characterised in that the knock-out means comprise a ring (58) of a diameter which is less than the smallest inner diameter of the screwthreaded (51) socket (50), the ring having one or more teeth or the like (56) at one end thereof.

8. An electrical junction box (2; 26; 54) having at least one socket (10; 30; 50) which has an internal screwthread (12; 31; 51), projects from a box-bounding wall (4, 6; 32, 34; 43, 45), is closed at the end remote from the outside of the box by a knock-out wall (14; 38; 52) and is adapted to receive from the outside of the box the tubular end of a compression nut (18; 44) having an external screwthread (22; 47), characterised in that the side of the knock-out wall (14; 38; 52) facing away from the inside of the box (2; 26; 54) has one or more teeth or the like (16; 42; 56) along its periphery, the axial length of the internal screwthread (12; 31; 51) of the socket being less than the sum of the axial lengths of a tooth or the like and of the external screwthread (22; 47) of the tubular end of the compression nut.

9. A junction box according to claim 8, characterised in that a tooth or the like (16; 56) is disposed along the part of the periphery of a knock-out wall (14; 13; 52) facing a cover aperture of the box (2; 26; 54), suck knock-out wall being provided in a side wall of box.

10. A compression nut (18; 44) whose end is tubular, has an external screwthread (22; 47) and is adapted to be screwed into a socket (10; 30; 50) of an electrical junction box from the outside thereof, the socket projecting from a box-bounding wall (4, 6; 32, 34; 43, 45), having an internal screwthread (12; 31; 51) and being closed at the end remote from the outside of the box by a knock-out wall (14; 38; 52), characterised in that the side of the tubular end of the compression nut (46) which is adapted to face the knock-out wall (52) has along its periphery one or more teeth or the like (48, 49), the sum of the axial lengths of a tooth or the like and of the external screwthread (22; 47) of the tubular end of the compression nut being greater than the axial length of the internal screwthread (12; 31; 51) of the socket.

11. A compression nut according to claim 10, characterised in that the tooth or the like (48) is rounded on the side adapted to face the knock-out wall (52).

12. A compression nut according to claim 10, characterised in that the tooth or the like (49) has a pointed end at the side adapted to face the knock-out wall (52).

13. A ring (58) for a combination of an electrical junction box having at least one socket (50) which projects from a box-bounding wall, has an internal screwthread (51) and is closed at the end remote from the outside of the box by a knock-out wall (52), and of a compression nut (18) whose end is tubular and has an external screwthread (22) and is adapted to be screwed into a socket from the outside of the box, characterised in that the ring (58) has a diameter which is less than the smallest inner diameter of the screwthreaded (51) socket (50), which ring (58) has at one end thereof one or more teeth or the like (56), and is adapted to be disposed in the assembled state between, on the one hand, the side of the knock-out wall (52) which faces the compression nut (18) and, on the other hand, the side of the tubular end of the compression nut which faces the knock-out wall, the axial length of the internal screwthread (51) of the socket being less than the sum of the axial lengths of the ring, of one tooth or the like and of the external screwthread (22) of the tubular end of the compression nut.

## Revendications

1. Combinaison d'une boîte de jonction électrique (2 ; 26 ; 54), laquelle présente au moins une tubulure (10 ; 30 ; 50) qui, munie d'un taraudage (12 ; 31 ; 51) et faisant saillie hors d'une paroi (4, 6 ; 32, 34 ; 43, 45) limitant la boîte de jonction, est fermée, à son extrémité détournée du côté extérieur de la boîte de jonction, par une paroi à défoncer (14 ; 38 ; 52), et d'un écrou-raccord (18 ; 44) dont l'extrémité est tubulaire et munie d'un filetage extérieur (22 ; 47), et est destinée à être vissée de l'extérieur de la boîte de jonction dans une tubulure de cette dernière, caractérisée en ce que, à l'état monté, des moyens de rupture ou de défoncement (16 ; 42 ; 56, 58) sont disposés entre la face de la paroi à défoncer (14 ; 38 ; 52) qui est tournée vers l'écrou-raccord (18 ; 44) et la face, tournée vers la paroi à défoncer, de l'extrémité tubulaire de l'écrou-raccord (20 ; 46), lesquels moyens de rupture ou de défoncement s'étendent le long d'une partie de la périphérie intérieure de la tubulure de boîte de jonction (10 ; 30 ; 50), la longueur axiale du taraudage (12 ; 31 ; 51) de la tubulure de boîte de jonction étant inférieure à la somme des longueurs axiales des moyens de rupture ou de défoncement et du filetage extérieur (22 ; 47) de l'extrémité tubulaire de l'écrou-raccord.

2. Combinaison selon la revendication 1, caractérisé en ce que les moyens de rupture ou de défoncement présentent une ou plusieurs saillies (16 ; 42 ; 56) disposées sur la face, détournée de l'intérieur de la boîte de jonction (2 ; 26 ; 54), de la paroi à défoncer (14 ; 38 ; 52) et le long de la périphérie de cette dernière.

3. Combinaison selon la revendication 2, caractérisée en ce qu'une saillie (16 ; 56) est prévue le long de la partie, orientée vers une ouverture à couvercle de la bôite de jonction (2 ; 26 ; 54), de la périphérie d'une paroi à défoncer (14 ; 38 ; 52) dont une paroi latérale de la boîte de jonction est munie.

4. Combinaison selon la revendication 3, caractérisée en ce que les moyens de rupture ou de défoncement comprennent une ou plusieurs saillies (48, 49) prévues sur la face, orientée vers la paroi à défoncer (52), de l'extrémité tubulaire de l'écrou-raccord (46) et sur la périphérie de ce dernier.

5. Combinaison selon la revendication 4, caractérisée en ce que la saillie (48) sur la face orientée vers la paroi à défoncer (52) est arrondie.

6. Combinaison selon la revendication 4, caractérisée en ce que la saillie (49) sur la face orientée vers la paroi à défoncer (52) est munie d'une extrémité pointue.

7. Combinaison selon la revendication 1, caractérisée en ce que les moyens de rupture ou de défoncement comprennent une bague (58) d'un diamètre qui est inférieur au plus petit diamètre intérieur de la tubulure de boîte de jonction (50) munie du taraudage (51), laquelle bague est munie à l'une de ses extrémités d'une ou plusieurs saillies (56).

8. Boîte de jonction électrique (2 ; 26 ; 54) présentant au moins une tubulure de boîte de jonction (10 ; 30 ; 50) qui, munie d'un taraudage (12 ; 31 ; 51) et faisant saillie hors d'une paroi (4, 6 ; 32, 34 ; 43, 45) limitant la boîte de jonction, est fermée, à son extrémité détournée du côté extérieur de la boîte de jonction, par une paroi à défoncer (14 ; 38 ; 52), et est destinée à recevoir une extrémité tubulaire, munie d'un filetage extérieur (22 ; 47), d'un écrou-raccord (18 ; 44) à partir du côté extérieur de la boîte de jonction, caractérisée en ce que la face, détournée de l'intérieur de la boîte de jonction (2 ; 26 ; 54), de la paroi à défoncer (14 ; 38 ; 52) présente, sur sa périphérie, une ou plusieurs saillies (16 ; 42 ; 56), la longueur axiale du taraudage (12 ; 31 ; 51) de la tubulure de boîte de jonction étant inférieure à la somme des longueurs axiales d'une saillie et du filetage extérieur (22 ; 47) de l'extrémité tubulaire de l'écrou-raccord.

9. Boîte de jonction selon la revendication 8, caractérisée en ce qu'une saillie (16 ; 56) est disposée le long de la partie, orientée vers une ouverture à couvercle de la boîte de jonction (2 ; 26 ; 54), de la périphérie d'une paroi à défoncer (14 ; 38 ; 52) dont une paroi latérale de la boîte de jonction est munie.

10. Ecrou-raccord (18 ; 44) dont l'extrémité est tubulaire et munie d'un filetage extérieur (22 ; 47) et est destinée à être vissée, de l'extérieur d'une boîte de jonction électrique, dans une tubulure (10 ; 30 ; 50) de la boîte de jonction, la tubulure de boîte de jonction étant munie d'un taraudage (12 ; 31 ; 51) et faisant saillie hors d'une paroi (4, ; 6 ; 32, 34 ; 43, 45) limitant la boîte de jonction, et étant fermée, à son extrémité détournée du côté extérieur de la boîte de jonction, par une paroi à défoncer (14 ; 38 ; 52), caractérisé en ce que la face, à orienter vers la paroi à défoncer (52), de l'extrémité tubulaire de l'écrou-raccord (46) présente, le long de sa périphérie, une ou plusieurs saillies (48, 49), la somme des longueurs axiales d'une saillie et du filetage extérieur (22 ; 47) de l'extrémité tubulaire de l'écrou-raccord étant supérieure à la longueur axiale du taraudage (12 ; 31 ; 51) de la tubulure de boîte de jonction.

11. Ecrou-raccord selon la revendication 10. caractérisé en ce que la saillie (48), sur la face à orienter vers la paroi à défoncer (52), est arrondie.

12. Ecrou-raccord selon la revendication 10, caractérisé en ce que la saillie (49) est munie, sur la face à orienter vers la paroi à défoncer (52), d'une extrémité pointue.

13. Bague (58) pour la combinaison d'une boîte de jonction électrique, laquelle présente au moins une tubulure (50) qui, munie d'un taraudage (51) et faisant saillie hors d'une paroi limitant la boîte de jonction, est fermée à son extrémité détournée du côté extérieur de la boîte, par une paroi à défoncer (52), et d'un écrou-raccord (18) dont l'extrémité est tubulaire et munie d'un filetage extérieur (22), et est destinée à être vissée, de l'extérieur de la boîte de jonction, dans une tubulure de cette dernière, caractérisée en ce que la bague (58) présente un diamètre inférieur au plus petit diamètre intérieur de la tubulure de boîte de jonction (50) munie du taraudage (51), laquelle bague est munie, à l'une de ses extrémités, d'une ou plusieurs saillies (56) et est destinée à être disposée entre la face de la paroi à défoncer (52) qui est tournée vers l'écrou-raccord (18) et la face, tournée vers la paroi à défoncer, de l'extrémité tubulaire de l'écrou-raccord, la longueur axiale du taraudage (51) de la tubulure de boîte de jonction étant inférieure à la somme des longueurs axiales de la bague, d'une saillie et du filetage extérieur (22) de l'extrémité tubulaire de l'écrou-raccord.
